# EUROPÄISCHE PATENTSCHRIFT

(11) **EP 1 254 014 B1**
(45) Veröffentlichungstag und Bekanntmachung des Hinweises auf die Patenterteilung: **24.03.2004**
(21) Anmeldenummer: 01915139.8
(22) Anmeldetag: 17.01.2001
(51) Int. Cl.: B29C 49/00, B29D 23/18, B29C 33/36

(54) **VORRICHTUNG ZUR HERSTELLUNG VON PROFILIERTEN KUNSTSTOFF-ROHREN**
DEVICE FOR PRODUCING PROFILED TUBES CONSISTING OF SYNTHETIC MATERIAL
DISPOSITIF DE FABRICATION DE TUBES EN PLASTIQUE PROFILES

(30) Priorität: 12.02.2000 DE 10006380
(43) Veröffentlichungstag der Anmeldung: 06.11.2002
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Albrecht
(86) Internationale Anmeldenummer: PCT/EP2001/000464
(87) Internationale Veröffentlichungsnummer: WO 2001/058669

(56) Entgegenhaltungen:
- EP-A- 0 679 498
- EP-A- 0 764 519
- DE-A- 3 120 480
- DE-A- 19 700 028
- US-A- 5 489 201

## Beschreibung

Die Erfindung betrifft eine Vorrichtung zur Herstellung von profilierten Kunststoff-Rohren nach dem Oberbegriff des Anspruches 1.

Bei einer derartigen aus der DE 31 20 480 A 1 (entspr. US-Patent 4,492,551) bekannten Vorrichtung erfolgt der Antrieb der jeweils paarweise zu einer Form zusammengedrückten Halbkokillen auf der Formstrecke mittels eines oberen Antriebsritzels, das in jeweils eine Verzahnung an der Oberseite jeder Halbkokille eingreift. Das Absaugen des Vakuums erfolgt über Vakuumanschlüsse in der Oberseite des Maschinentisches, die am Beginn der Formstrecke in Überdeckung mit Vakuumkanälen kommen, die in den Halbkokillen ausgebildet sind. Gleichermaßen münden Kühlwasserzuflüsse und Kühlwasserabflüsse in der Oberseite des Maschinentisches aus, die auf der Formstrecke mit in den Halbkokillen ausgebildeten Kühlwasserkanälen, die an der Unterseite der Halbkokille ausmünden, in Überdeckung kommen. Wesentlich ist, daß zwischen der Gleitfläche des Maschinentisches, insbesondere im Bereich der Formstrecke, und den Unterseiten der Halbkokillen eine flächige dichte Anlage besteht, damit insbesondere keine Vakuumverluste dadurch entstehen, daß die Luft zwischen der Unterseite der Halbkokillen und der Gleitfläche des Maschinentisches und nicht durch die Vakuumkanäle in den Halbkokillen angesaugt wird. Entsprechendes gilt insoweit für das Kühlwasser, das nicht - oder jedenfalls nicht in nennenswertem Maße - zwischen der Unterseite der Halbkokillen und der Gleitfläche des Maschinentisches seitlich der Formstrecke austreten soll. Wenn Rohre mit größeren Durchmesserbereichen auf derartigen Vorrichtungen hergestellt werden sollen, beispielsweise Rohre in einem unteren Nennweitenbereich von 100 bis 150 mm und einem oberen Nennweitenbereich bis 400 mm, dann treten insbesondere im oberen Nennweitenbereich, also bei relativ großen Halbkokillen, Dichtigkeitsprobleme zwischen den Unterseiten der Halbkokillen und der Gleitfläche des Maschinentisches auf, die auf der Formstrecke zu den geschilderten Nachteilen führen.

Aus der DE 197 00 028 A1 sind Halbkokillen für Vorrichtungen zur Herstellung von profilierten Kunststoff-Rohren bekannt, die auch für große Wellrohrformmaschinen geeignet sein sollen. An ihrer Oberseite und an ihrer Unterseite weisen sie eine Verzahnung auf, ohne daß hierzu Einzelheiten offenbart sind.

Aus der DE 43 18 514 C1 ist eine Vorrichtung zum Herstellen von profilierten Kunststoff-Rohren bekannt, bei der jeweils zwei Halbkokillen auf einer Formstrecke zu einer Form zusammengeführt werde, die an ihrer Oberseite und an ihrer Unterseite mit Verzahnungen versehen sind, wobei in jede Verzahnung ein Antriebsritzel eingreift. Die bekannte Ausgestaltung kann nur im sogenannten Blasverfahren eingesetzt werden, bei dem in das zu erzeugende Rohr Luft mit Überdruck eingeblasen wird. Dichtigkeitsprobleme zwischen den Halbkokillen und dem Maschinentisch treten hierbei nicht auf.

Der Erfindung liegt die Aufgabe zugrunde, eine Vorrichtung der gattungsgemäßen Art so auszugestalten, daß auch bei Einsatz von Halbkokillen zur Herstellung von Rohren im oberen Nennweitenbereich keine Dichtigkeitsprobleme zwischen den Unterseiten der Halbkokillen und der Gleitfläche des Maschinentisches, insbesondere im Bereich der Formstrecke, auftreten.

Diese Aufgabe wird erfindungsgemäß durch die Merkmale im Kennzeichnungsteil des Anspruches 1 gelöst. Durch die Möglichkeit, zumindest die Halbkokillen, die zur Herstellung von Rohren mit größerem Nenndurchmesser ausgelegt sind, nicht nur an ihrer Oberseite, sondern auch in ihrem unteren Bereich anzutreiben, wird ein verkantungsfreier Antrieb der Halbkokillen auf der Formstrecke sichergestellt. Damit wird ausgeschlossen, daß zu Undichtigkeiten führende Schleifspuren auf der Gleitfläche des Maschinentisches entstehen können. Nur die zur Herstellung von Rohren mit größerem Nenndurchmesser dienenden Halbkokillen werden auch im Bereich ihrer Unterseite angetrieben, während die zur Herstellung von Rohren mit kleinerem Nenndurchmesser dienenden Halbkokillen nur von der Oberseite her angetrieben werden.

Vorteilhafte Weiterbildungen der Erfindung sind Gegenstand der abhängigen Ansprüche.

Von Vorteil ist es, wenn gemäß der Weiterbildung nach Anspruch 2 die Antriebsritzel miteinander fluchten und insbesondere gemäß Anspruch 3 den Maschinentisch durchsetzen, also in untere Verzahnungen an den Halbkokillen eingreifen, die an deren Unterseiten, aber unmittelbar benachbart zu ihren Seitenwänden, ausgebildet sind.

Durch die weitere Ausgestaltung nach Anspruch 4 wird erreicht, daß der untere Antrieb der Halbkokillen außerhalb der Gleitfläche positioniert ist.

Weitere Merkmale, Einzelheiten und Vorteile der Erfindung ergeben sich aus der nachfolgenden Beschreibung eines Ausführungsbeispieles anhand der Zeichnung. Es zeigt
- Fig. 1: eine Draufsicht auf eine Vorrichtung zur Herstellung von Kunststoff-Rohren,
- Fig. 2: einen Querschnitt durch die Vorrichtung nach Fig. 1 mit Halbkokillen zur Herstellung von Kunststoff-Rohren großer Nennweite und
- Fig. 3: einen Querschnitt durch die Vorrichtung nach Fig. 1 mit Halbkokillen zur Herstellung von Kunststoff-Rohren kleiner Nennweite.

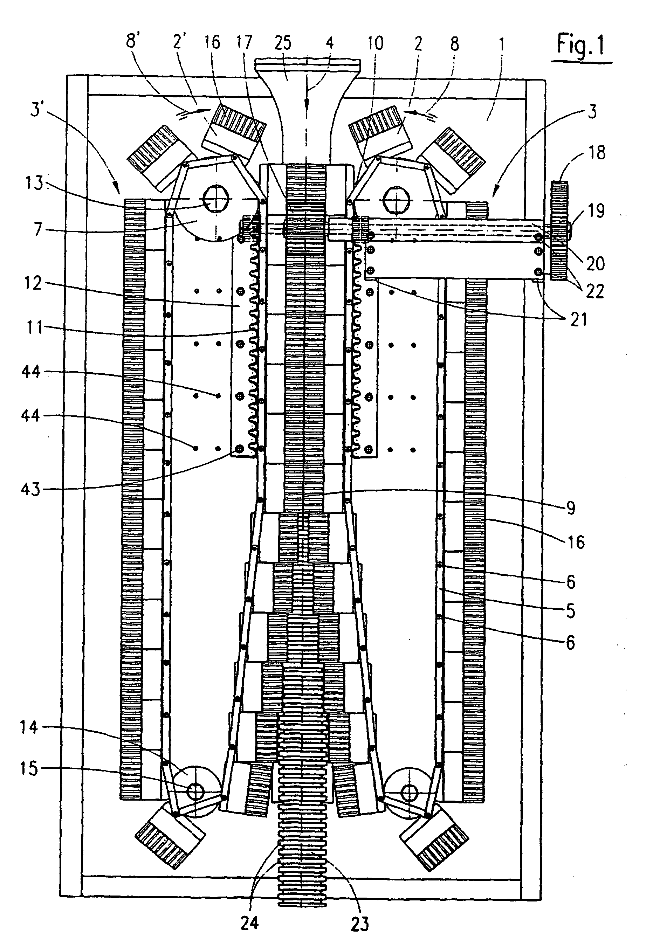

Wie Fig. 1 erkennen läßt, weist eine Vorrichtung zur Herstellung von Kunststoff-Verbund-Rohren mit Querrillen einen Maschinentisch 1 auf, auf dem Halbkokillen 2 bzw. 2' angeordnet sind, die jeweils zu zwei sogenannten Ketten 3 bzw. 3' miteinander verbunden sind. Hierzu sind an jeder Halbkokille 2 bzw. 2' in ihrem außenliegenden, in Produktionsrichtung 4 vorderen Bereich Laschen 5 mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3, 3' sind an ihrem in Produktionsrichtung 4 gesehen rückwärtigen Ende über als sogenannte Einlaufrollen 7 dienende Umlenkräder geführt. Die einzelnen Halbkokillen 2, 2' werden beim Umlauf der Ketten 3, 3' entsprechend den Umlaufrichtungspfeilen 8 bzw. 8' in eine Formstrekke 9 eingeschwenkt, in der jeweils zwei Halbkokillen 2, 2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2, 2' zu einer parallelen und aneinanderliegenden Stellung zu erreichen, sind sogenannte Schließrollen 10 vorgesehen, die die in Produktionsrichtung 4 hinteren Enden der Halbkokillen 2, 2' beschleunigt zusammenführen.

In der Formstrecke 9 selber werden die aneinanderliegenden Halbkokillen 2, 2' mittels Führungsrollen 11, die in quer zur Produktionsrichtung 4 und horizontal verstellbaren Führungsleisten 12 drehbar gelagert sind, gegeneinander gedrückt. Die Einlaufrollen 7 sind um Achszapfen 13 drehbar am Maschinentisch 1 angebracht. Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander wegbewegt werden können, bevor sie von den Rücklaufrollen 14 verschwenkt werden.

An der Oberseite der Halbkokillen 2, 2' ist eine Verzahnung 16 ausgebildet, wobei die beiden Verzahnungen 16 der einander paarweise zugeordneten Halbkokillen 2, 2' miteinander fluchten, so daß von oben ein gemeinsames Antriebsritzel 17 in diese Verzahnung 16 eingreifen kann, das die Halbkokillen 2, 2' in der Formstrecke 9 als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehtest befestigt ist, die wiederum das Antriebsritzel 17 trägt. Die Welle 19 ist in einem Lagerbock 20 gelagert, der über Distanzprismen 21 höhenverstellbar gegenüber dem Maschinentisch abgestützt und mit letzterem mittels Schrauben 22 fest verbunden ist.

Auf der dargestellten Vorrichtung werden Kunststoff-Rohre 23, und zwar sogenannte Well-, Verbund- oder Rippen-Rohre, mit einer Querprofilierung, d. h. mit über deren Umfang umlaufenden Rillen 24 hergestellt. Zur Herstellung der Rohre 23 ist ein Extruder vorgesehen, von dem nur der Rohrkopf 25 angedeutet ist, wobei es sich bei dem Rohrkopf 25 um den Spritzkopf des Extruders handelt. Aus dem Rohrkopf 25 wird ein nicht sichtbarer Schlauch extrudiert, der in noch warmplastischem Zustand in die in der Formstrecke 9 gebildete Form einläuft, in der die Querprofilierung ausgebildet wird. Die bisher beschriebene Vorrichtung ist bekannt, und zwar beispielsweise aus der DE 196 40 928 A1 (entspr. US-Patent Ser.No. 08/934 349). Mit dieser Vorrichtung können in gleicher Weise sogenannte Verbundrohre hergestellt werden, die äußerlich dem Rohr 23 gleichen und innen noch mit einem durchgehend glatten Rohr einstöckig ausgebildet sind.

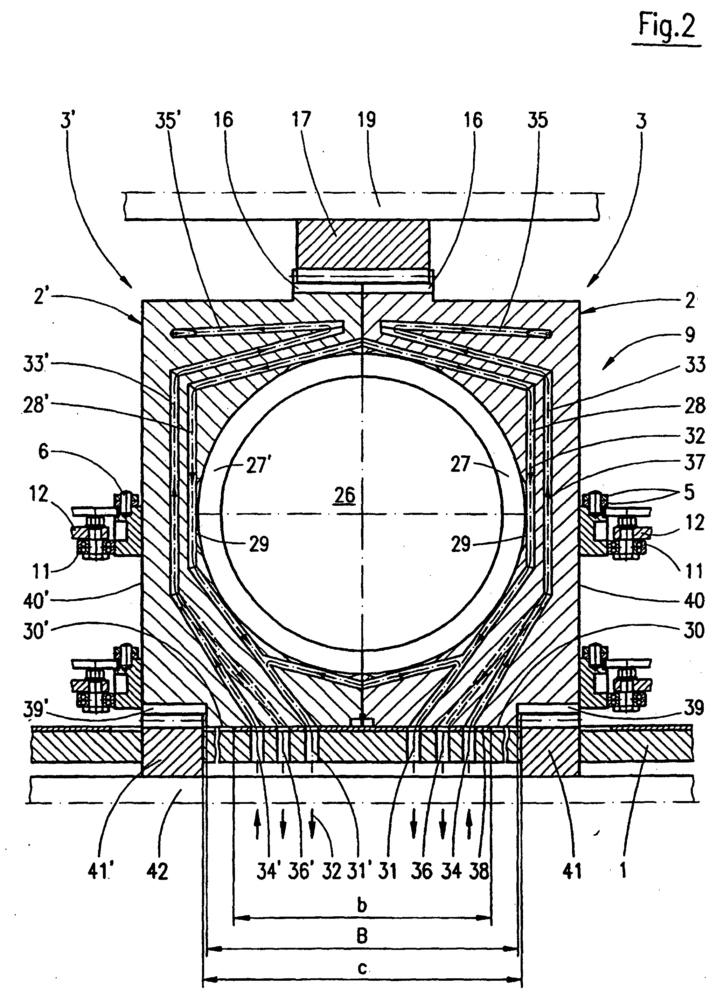

In der Formstrecke 9 werden die paarweise einander zugeordneten Halbkokillen 2, 2' gekühlt; außerdem erfolgt die Ausformung der Rillen 24 durch Vakuumbeaufschlagung des in der Formstrecke 9 gebildeten Formraums 26. Die in den Halbkokillen 2, 2' zur Bildung eines Formraumes 26 ausgeformten Formausnehmungen 27, 27' haben eine zu der Außenform des Rohres 23 komplementäre Form. Die Halbkokillen 2, 2' sind mit Vakuumkanälen 28, 28' versehen, die in der Nähe der Wand der Formausnehmung 27 bzw. 27' verlaufen und diese bei paarweise aneinanderliegenden Halbkokillen 2, 2' in verhältnismäßig geringem Abstand umschließen. Von den Vakuumkanälen 28, 28' münden zahlreiche Vakuumschlitze 29 in die Formausnehmung 27 bzw. 27'. Die Vakuumkanäle 28, 28' sind bei aneinanderliegenden Halbkokillen 2, 2' miteinander verbunden, wie aus Fig. 2 hervorgeht. Die Vakuumkanäle 28 bzw. 28' münden in die auf dem Maschinentisch 1 aufliegende Unterseite 30 bzw. 30' der Halbkokillen 2, 2'. Bei paarweise aneinanderliegenden Halbkokillen 2, 2' befinden sie sich in Überdeckung mit im Maschinentisch 1 angebrachten Vakuumanschlüssen 31, 31', die wiederum an eine nicht dargestellte Vakuumpumpe angeschlossen sind. Die Luftströmung in den Vakuumkanälen 28, 28' und an den Vakuumanschlüssen 31, 31' ist durch Richtungspfeile 32 gekennzeichnet.

Weiterhin sind in den Halbkokillen 2, 2' Kühlkanäle 33, 33' vorgesehen, wobei die Kühlkanäle 33, 33' in den paarweise einander zugeordneten Halbkokillen 2, 2' keine Verbindung untereinander haben. Sie beginnen ebenfalls an der jeweiligen Unterseite 30, 30' der entsprechenden Halbkokille 2, 2', wo sie bei aneinanderliegenden Halbkokillen 2, 2' mit im Maschinentisch 1 ausgebildeten Kühlwasserzuflüssen 34, 34' in Überdeckung kommen. Von dort führen die Kühlkanäle 33, 33' im Abstand um die jeweilige Formausnehmung 27, 27' herum. Unterhalb der Verzahnung 16 sind außerdem wiederum nach außen geführte Zusatzkühlkanäle 35 bzw. 35' ausgebildet. Die Kühlkanäle 33, 33' sind - in Produktionsrichtung 4 gesehen - jeweils in verhältnismäßig geringem Abstand voneinander angeordnet. Jeweils zwei in Produktionsrichtung 4 einander benachbarte Kühlkanäle 33 bzw. 33' sind miteinander verbunden. Wenn jeweils ein Kühlkanal 33 bzw. 33' an den Kühlwasserzufluß 34 bzw. 34' angeschlossen ist, kann auf diese Weise der in Produktionsrichtung 4 nachfolgende Kühlkanal 33, 33' an einen in dem Maschinentisch 1 ausgebildeten Kühlwasserrückfluß 36, 36' angeschlossen sein, wie insbesondere aus Fig. 2 linke Hälfte hervorgeht. Die Kühlwasserströmungsrichtung ist durch die Richtungspfeile 37 angedeutet. Die Vakuumführung und die Kühlwasserführung sind beispielsweise aus der DE 31 20 480 A1 (entspr. US-Patent 4,492,551) bekannt.

Auf dem Maschinentisch 1 ist eine Gleitplatte 38 aus einem Gleitlagermetall angeordnet, die beispielsweise aus Messing besteht. Messing hat gute Gleitlagereigenschaften gegenüber Stahl bzw. Aluminium, aus denen die Halbkokillen 2, 2' ganz oder teilweise bestehen. Die Gleitplatte 38 wird von den Vakuumanschlüssen 31, 3 I', den Kühlwasserzuflüssen 34, 34' und dem Kühlwasserrückfluß 36, 36' durchsetzt. Sie dient als Gleitfläche für die Halbkokillen 2, 2'. Im seitlichen Außenbereich der in Fig. 2 dargestellten Halbkokillen sind diese mit einer nach unten offenen, versenkt ausgebildeten Verzahnung 39, 39' versehen, die sich unmittelbar an die Seitenwände 40, 40' der Halbkokillen 2, 2' anschließt. Am Maschinentisch 1 sind hierzu zugeordnet untere Antriebsritzel 41, 41' angeordnet, die den Maschinentisch 1 und die Gleitplatte 38 durchsetzen und in die Verzahnungen 39, 39' eingreifen. Die beiden Antriebsritzel 41, 41' sind auf einer gemeinsamen Welle 42 angeordnet, die vom selben Antrieb wie die obere Welle 19 angetrieben wird, und zwar über ein nicht dargestelltes Getriebe. Der Antrieb ist derart, daß die Halbkokillen 2, 2' von dem oberen Antriebsritzel 17 und den unteren Antriebsritzeln 41, 41' mit absolut identischer Geschwindigkeit angetrieben werden.

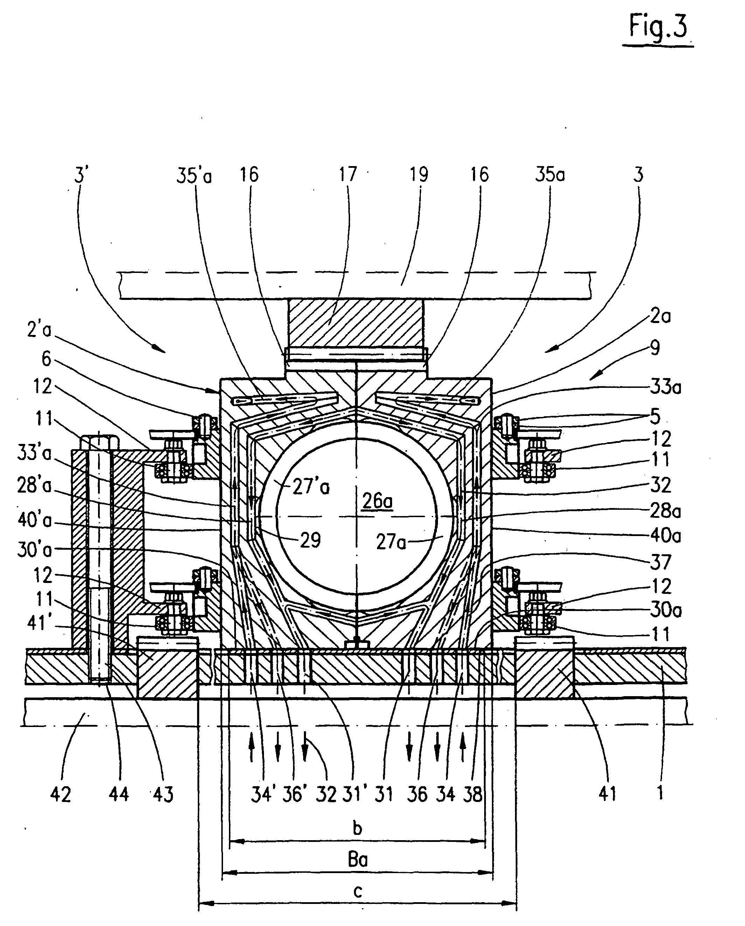

Die in Fig. 3 dargestellten Halbkokillen sind in ihrem Aufbau ähnlich denjenigen nach Fig. 2; sie sind nur deutlich kleiner. Während in Fig. 2 die größtmöglichen Halbkokillen 2, 2' zur Formung von Rohren 23 mit dem größtmöglichen Durchmesser dargestellt sind, sind in Fig. 3 die Halbkokillen 2a und 2'a zur Formung von Rohren 23 mit dem kleinstmöglichen Durchmesser dargestellt, die jeweils auf ein und derselben Maschine eingesetzt werden können. Die insoweit in Fig. 3 ähnlichen aber von der Größe her nicht identischen Teile werden mit denselben Bezugsziffern wie in Fig. 2 bezeichnet, denen jeweils ein kleines "a" beigefügt ist.

Wie Fig. 3 entnehmbar ist, münden die Vakuumkanäle 28a, 28'a und die Kühlkanäle 33a, 33'a an der Unterseite 30a, 30'a der Halbkokillen 2a, 2'a derart aus, daß sie mit den Vakuumanschlüssen 31, 31' den Kühlwasserzuflüssen 34, 34' und den Kühlwasserrückflüssen 36, 36' in Überdeckung kommen.

Die Breite b der als Gleitfläche dienenden Gleitplatte 38 ist - wie den Fig. 2 und 3 entnehmbar ist - kleiner als der lichte Abstand c der beiden Antriebsritzel 41, 41' voneinander. Die Breite b ist weiterhin geringer als die Gesamtbreite B der Unterseiten 30, 30' der größtmöglichen Halbkokillen 2, 2' zwischen den die Verzahnungen 39, 39' aufnehmenden Hinterschneidungen. Die Breite b der Gleitplatte 38 ist aber auch zumindest geringfügig kleiner als die Gesamtbreite Ba der Unterseiten 30a, 30'a der kleinstmöglichen Halbkokillen 2a, 2'a, und zwar von Seitenwand 40a zu Seitenwand 40'a. Die Gleitplatte 38 wird also immer vollständig von den Halbkokillen 2, 2' bzw. 2a, 2'a abgedeckt, so daß dort beim Einsatz von unterschiedlich großen Halbkokillen 2, 2' bzw. 2a, 2'a keine Schleifspuren entstehen können, die die Dichtigkeit zwischen Gleitplatte 38 und Unterseite 30, 30' bzw. 30a, 30'a beeinträchtigen könnten.

Bei Einsatz relativ großer Halbkokillen 2, 2' erfolgt deren Antrieb von oben über das Antriebsritzel 17 und von unten über die Antriebsritzel 41, 41', so daß ein verkantungsfreier Antrieb gewährleistet ist. Bei Einsatz kleinerer Halbkokillen 2a, 2'a ist dies nicht notwendig; sie werden nur vom oberen Antriebsritzel 17 angetrieben.

Die vorstehend geschilderten Maßnahmen können naturgemäß nicht nur bei einer Vorrichtung eingesetzt werden, bei der die Halbkokillen 2, 2' bzw. 2a, 2'a mittels Laschen 5 zu sogenannten Ketten 3, 3' miteinander verbunden sind, sondern sie können auch eingesetzt werden bei Vorrichtungen, bei denen die einzelnen Halbkokillen einzeln transportiert werden, die beispielsweise wie bei einer Vorrichtung nach der EP 0 764 516 A (entspr. US-Patent 5,693,347) ausgestattet sind.

Aus den Fig. 1 und 3 ergibt sich auch, wie die Führungsleisten 12 quer zur Produktionsrichtung 4 horizontal verstellbar sind, so daß die Formstrecke 9 auf unterschiedlich breite Halbkokillen 2, 2' bzw. 2a, 2'a eingestellt werden kann. Die Führungsleisten 12 können mittels Schrauben 43 am Maschinentisch 1 befestigt werden, wozu im Maschinentisch 1 quer zur Produktionsrichtung 4 mehrere Reihen von Gewindebohrungen 44 ausgebildet sind. Jede Reihe von Gewindebohrungen 44 entspricht einer bestimmten Breite einer Halbkokille 2, 2' bzw. 2a, 2'a.

## Patentansprüche

1. Vorrichtung zur Herstellung von profilierten Kunststoff-Rohren,
- mit einem Maschinentisch (1),
- - mit einer Gleitfläche (38) mit einer Breite b,
- mit Halbkokillen (2, 2'; 2a, 2'a), die
- - jeweils eine Unterseite (30, 30'; 30a, 30'a) aufweisen, mittels derer sie auf dem Maschinentisch (1) geführt sind,
- - jeweils eine Oberseite mit einer oberen Verzahnung (16) aufweisen,
- - jeweils eine Seitenwand (40, 40', 40a, 40'a) aufweisen,
- - jeweils eine Formausnehmung (27, 27') aufweisen,
- - mit Vakuumkanälen (28, 28'; 28a, 28'a) versehen sind, die in die jeweilige Formausnehmung (27, 27') einmünden und
- - mit Kühlkanälen (33, 33'; 33a, 33'a) versehen sind,
- mit einer Formstrecke (9),
- - die sich in einer Produktionsrichtung (4) erstreckt und
- - auf der sich die Halbkokillen (2, 2'; 2a, 2'a) jeweils paarweise zu einer Form ergänzen,
- mit die Halbkokillen (2, 2'; 2a, 2'a) auf der Formstrecke (9) jeweils paarweise zusammendrückenden, an den Seitenwänden (40, 40'; 40a, 40'a) angreifenden horizontal und quer zur Produktionsrichtung (4) verstellbaren Führungen (12),
- mit einem der Formstrecke (9) in Produktionsrichtung (4) vorgeordneten Rohrkopf (25),
- mit in der Formstrecke (9) am Maschinentisch (1) ausgebildeten, die Gleitfläche (38) durchsetzenden Vakuumanschlüssen (31, 31'), die in die Vakuumkanäle (28, 28'; 28a, 28'a) einmünden,
- mit in der Formstrecke (9) am Maschinentisch (1) ausgebildeten die Gleitfläche (38) durchsetzenden Kühlwasserzuflüssen (34, 34') und die Gleitfläche (38) durchsetzenden Kühlwasserrückflüssen (36, 36'), die in die Kühlkanäle (33, 33'; 33a, 33'a) einmünden und
- mit mindestens einem oberhalb der Formstrecke (9) angeordneten, in die obere Verzahnung (16) an der Oberseite der Halbkokillen (2, 2'; 2a, 2'a) eingreifenden oberen Antriebsritzel (17) zum Vortrieb der auf der Formstrecke (9) zu einer Form ergänzten Halbkokillen (2, 2'; 2a, 2'a) in Produktionsrichtung (4),
**dadurch gekennzeichnet,**
**daß** am Maschinentisch (1) an der Formstrecke (9) quer zur Produktionsrichtung (4) im Abstand c voneinander zwei untere Antriebsritzel (41, 41') vorgesehen sind und
**daß** ein erster Satz von Halbkokillen (2, 2') und ein zweiter Satz von Halbkokillen (2a, 2'a) vorgesehen sind, die wahlweise auf dem Maschinentisch (1) anzuordnen sind, von denen die Halbkokillen (2, 2') des ersten Satzes im Übergangsbereich zwischen den Seitenwänden (40, 40') und den Unterseiten (30, 30') jeweils verglichen mit den Formausnehmungen (27') des zweiten Satzes eine größere Formausnehmung (27) aufweisen und mit einer unteren Verzahnung (39, 39') versehen sind, in die ein unteres Antriebsritzel (41, 41') eingreift, und von denen die Halbkokillen (2', 2'a) des zweiten Satzes frei von unteren Verzahnungen sind.

2. Vorrichtung nach Anspruch 1, **dadurch gekennzeichnet,**
**daß** die zwei unteren Antriebsritzel (41, 41') miteinander fluchten.

3. Vorrichtung nach Anspruch 1, **dadurch gekennzeichnet,**
**daß** die zwei unteren Antriebsritzel (41, 41') den Maschinentisch (1) durchsetzen.

4. Vorrichtung nach Anspruch 3, **dadurch gekennzeichnet,**
**daß** für die Breite b der Gleitfläche (38) zwischen den unteren Antriebsritzeln (41, 41') im Vergleich zur Gesamtbreite B der Unterseiten (30, 30') der sich paarweise zu einer Form ergänzenden Halbkokillen (2, 2') des ersten Satzes von Halbkokillen (2, 2') und zur Gesamtbreite Ba der Unterseiten (30a, 30'a) sich der paarweise zu einer Form ergänzenden Halbkokillen (2a, 2'a) gilt: b ≤ B und b ≤ Ba.

5. Vorrichtung nach Anspruch 3, **dadurch gekennzeichnet,**
**daß** für die Breite b der Gleitfläche (38) auf der Formstrecke (9) im Vergleich zum Abstand c der unteren Antriebsritzel (41, 41') voneinander gilt: b < c.

6. Vorrichtung nach Anspruch 1, **dadurch gekennzeichnet,**
**daß** die Gleitfläche als auf dem Maschinentisch (1) angebrachte Gleitplatte (38) ausgebildet ist.

## Claims

1. An apparatus for the manufacture of profiled plastic pipes, comprising
- a machine bed (1),
-- which has a sliding surface (38) of a width b;
- half shells (2, 2'; 2a, 2'a), each of which having
-- a lower side (30, 30'; 30a, 30'a), by which they are guided on the machine bed (1),
-- an upper side with an upper indentation (16),
-- a side wall (40, 40', 40a, 40'a),
-- a mold recess (27, 27'),
and being provided
-- with vacuum ducts (28, 28'; 28a, 28'a), which open into the respective mold recess (27, 27'), and
-- with cooling channels (33, 33'; 33a, 33'a);
- a molding path (9),
-- which runs in a direction of production (4) and
-- on which the half shells (2, 2'; 2a, 2'a) mate together in pairs to form a mold;
- guides (12), which are adjustable horizontally and transversely to the direction of production (4) and act on the side walls (40, 40'; 40a, 40'a), pressing the half shells (2, 2'; 2a, 2'a) together in pairs on the molding path (9);
- a pipe die (25) upstream of the molding path (9) in the direction of production (4);
- vacuum connections (31, 31'), which are formed in the molding path (9) on the machine bed (1), passing through the sliding surface (38) and opening into the vacuum ducts (28, 28'; 28a, 28'a);
- cooling water flow lines (34, 34'), which are formed in the molding path (9) on the machine bed (1), passing through the sliding surface (38), and cooling water return lines (34, 34'), which pass through the sliding surface (38) and open into the cooling channels (33, 33'; 33a, 33'a); and
- at least one upper driving pinion (17), which is disposed above the molding path (9) and engages with the upper indentation (16) on the upper side of the half shells (2, 2'; 2a, 2'a), in the direction of production (4) advancing the half shells (2, 2'; 2a, 2'a) which mate together on the molding path (9) to form a mold;
**characterized**
**in that** two lower driving pinions (41, 41') are provided on the machine bed (1) along the molding path (9) crosswise of the direction of production (4) and at a distance c from each other; and
**in that** a first set of half shells (2, 2') and a second set of half shells (2a, 2'a) are provided, which are to be arranged optionally on the machine bed (1), and of which the half shells (2, 2') of the first set, between the side walls (40, 40') and the lower side (30, 30'), have greater mold recesses (27) than the mold recesses (27') of the second set and are provided with a lower indentation (39, 39') which a lower driving pinion (41, 41') engages with, and of which the half shells (2', 2'a) of the second set are free from indentations.

2. A apparatus according to claim 1, **characterized in that** two lower driving pinions (41, 41') are in alignment.

3. An apparatus according to claim 1, **characterized in that** the two lower driving pinions (41, 41') pass through the machine bed (1).

4. An apparatus according to claim 3, **characterized in that** b ≤ B and b ≤ Ba applies to the width b of the sliding surface (38) between the lower driving pinions (41, 41') as compared to the total width B of the lower sides (30, 30') of the half shells (2, 2') of the first set of half shells (2, 2') which mate together in pairs to form a mold, and to the total width Ba of the lower sides (30a, 30'a) of the half shells (2a, 2'a) which mate together in pairs to form a mold.

5. An apparatus according to claim 3, **characterized in that** b < c applies to the width b of the sliding surface (38) on the molding path (9) as compared to the distance c of the lower driving pinions (41, 41') from each other.

6. An apparatus according to claim 1, **characterized in that** the sliding surface is a sliding plate (38) mounted on the machine bed (1).

## Revendications

1. Dispositif destiné à la fabrication de tubes profilés en matière plastique,
- avec un plateau de machine (1),
- - avec une surface de glissement (38) d'une largeur b,
- avec des demi-coquilles (2, 2' ; 2a, 2'a), comportant respectivement
-- une face inférieure (30, 30' ; 30a, 30'a) au moyen de laquelle elles sont guidées sur le plateau de machine (1),
-- une face supérieure avec une denture supérieure (16),
-- une paroi latérale (40, 40' ; 40a, 40'a),
-- un évidement de conformation (27, 27'),
-- des canaux de mise sous vide (28, 28' ; 28a, 28'a) qui débouchent dans l'évidement de conformation (27, 27') respectif, et
-- des canaux de refroidissement (33, 33' ; 33a, 33'a),
- avec une ligne de conformation (9),
-- qui s'étend dans le sens de la production (4), et
-- sur laquelle les demi-coquilles (2, 2' ; 2a, 2'a) se complètent respectivement par couples en un moule,
- avec des guidages (12) pressant les demi-coquilles (2, 2' ; 2a, 2'a) par couples les unes contre les autres sur la ligne de conformation (9), qui agissent sur les parois latérales (40, 40' ; 40a, 40'a), et qui peuvent être déplacés horizontalement et transversalement au sens de la production (4),
- avec une tête tubulaire (25) disposée en amont de la ligne de conformation (9) dans le sens de la production (4),
- avec des raccordements de mise sous vide (31, 31') prévus dans la ligne de conformation (9) sur le plateau de machine (1), qui traversent la surface de glissement (38) et débouchent dans les canaux de mise sous vide (28, 28' ; 28a, 28'a),
- avec des arrivées d'eau de refroidissement (34, 34') prévues dans la ligne de conformation (9) sur le plateau de machine (1), qui traversent la surface de glissement (38), et des retours d'eau de refroidissement (36, 36'), qui traversent la surface de glissement (38) et débouchent dans les canaux de refroidissement (33, 33' ; 33a, 33'a), et
- avec au moins un pignon d'entraînement supérieur (17) disposé au-dessus de la ligne de conformation (9), qui s'engage dans la denture supérieure (16) prévue sur la face supérieure des demi-coquilles (2, 2' ; 2a, 2'a) pour l'avance dans le sens de la production (4) des demi-coquilles (2, 2' ; 2a, 2'a) complétées en un moule sur la ligne de conformation (9),
**caractérisé en ce que**,
dans la ligne de conformation (9), deux pignons d'entraînement inférieurs (41, 41') sont prévus sur le plateau de machine (1) à un écartement c l'un de l'autre transversalement au sens de la production (4), et
il est prévu un premier jeu de demi-coquilles (2, 2') et un deuxième jeu de demi-coquilles (2a, 2'a), qui peuvent être disposées au choix sur le plateau de machine (1), les demi-coquilles (2, 2') du premier jeu comportant dans la zone de transition entre les parois latérales (40, 40') et les faces inférieures (30, 30') un évidement de conformation (27), qui est plus grand que les évidements de conformation (27') du deuxième jeu, et étant munies d'une denture inférieure (39, 39') dans laquelle s'engage un pignon d'entraînement inférieur (41, 41'), et les demi-coquilles (2', 2'a) du deuxième jeu ne comportant pas de dentures inférieures.

2. Dispositif selon la revendication 1, **caractérisé en ce que** les deux pignons d'entraînement inférieurs (41, 41') sont alignés entre eux.

3. Dispositif selon la revendication 1, **caractérisé en ce que** les deux pignons d'entraînement inférieurs (41, 41') traversent le plateau de machine (1).

4. Dispositif selon la revendication 3, **caractérisé en ce que**, pour la largeur b de la surface de glissement (38) entre les pignons d'entraînement inférieurs (41, 41') par rapport à la largeur totale B des faces inférieures (30, 30') des demi-coquilles (2, 2') du premier jeu de demi-coquilles (2, 2') se complétant par couples en un moule, et par rapport à la largeur totale Ba des faces inférieures (30a, 30'a) des demi-coquilles (2a, 2'a) se complétant par couples en un moule : b ≤ B et b ≤ Ba s'appliquent.

5. Dispositif selon la revendication 3, **caractérisé en ce que**, pour la largeur b de la surface de glissement (38) sur la ligne de conformation (9) par rapport à l'écartement c entre les pignons d'entraînement inférieurs (41, 41') : b < c s'applique.

6. Dispositif selon la revendication 1, **caractérisé en ce que** la surface de glissement est réalisée sous la forme d'une plaque de glissement (38) fixée sur le plateau de machine (1).
